# FASCICULE DE BREVET EUROPEEN

(11) **EP 3 568 330 B1**
(45) Date de publication et mention de la délivrance du brevet: **10.03.2021**
(21) Numéro de dépôt: 18701417.0
(22) Date de dépôt: 14.01.2018
(51) Int. Cl.: B62B 13/04, B62B 13/16, B62B 17/06, A63C 5/03, A63C 5/06

(54) **DISPOSITIF DE PILOTAGE D'UNE PLANCHE DE SURF**
LENKVORRICHTUNG FÜR EINEN MONOSKI
STEERING DEVICE FOR A MONOSKI

(30) Priorité: 15.01.2017 FR 1770052
(43) Date de publication de la demande: 20.11.2019
(73) Titulaire: Ballu, Arnaud, 38330 Biviers (FR)
(72) Inventeur: Ballu, Arnaud, 38330 Biviers (FR)
(74) Mandataire: Verriest, Philippe
(86) Numéro de dépôt international: PCT/EP2018/050797
(87) Numéro de publication internationale: WO 2018/130671

(56) Documents cités:
- DE-A1- 10 102 340
- FR-A1- 2 732 609
- US-A- 4 773 659
- US-A1- 2006 197 294

## Description

### Domaine

La présente demande concerne un dispositif de pilotage d'une planche de surf, notamment d'une planche de surf des neiges.

### Etat de la technique

Il est bien connu de réaliser de multiples formes de contrôle de l'utilisateur sur son surf des neiges, sans nécessairement avoir les pieds verrouillés sur la planche.

Un dispositif connu consiste à reprendre le principe de la bicyclette en fixant une première planche de surf rigide et de dimensions sensiblement réduites à la partie arrière fixe d'un cadre équipé en sa partie avant d'une colonne de direction surmontée d'un guidon. L'extrémité basse de cet organe de direction est équipée d'une seconde planche, généralement de dimensions plus réduites que celle fixée sur l'arrière. Outre que cet équipement ne reproduit ni vraiment le comportement dynamique d'un vélo ni celui d'un surf des neiges, son coût imposé par deux planches spécifiques et son encombrement constituent des inconvénients majeurs.

Il existe également différents dispositifs comme des barres de maintien fixées à hauteur de hanches sur une partie de la planche mais qui contrôlent uniquement l'assiette de la planche dans la zone fixée et pas le gauchissement longitudinal complet de cette dernière. Or il est maintenant connu que l'inclinaison seule d'une partie de la longueur de la planche ne suffit pas à assurer son pilotage car le gauchissement qui en résulte du fait du poids de l'utilisateur est subi et non pas contrôlé.

### Objet de l'invention

L'objet de la présente invention consiste à réaliser un dispositif de contrôle d'une planche de surf notamment pour la neige, par la simple rotation et le simple basculement combinés d'un organe de pilotage unique tel un guidon, simultanément par inclinaison latérale et par gauchissement longitudinal. Il combine donc les fonctionnalités mécaniques nécessaires d'une paire de fixations conventionnelles avec la facilité d'usage d'une bicyclette et ne nécessite pas de planche de surf spécifique. Il permet de se mouvoir librement sur la neige en pilotant avec les deux pieds retenus mais non verrouillés, ou bien de s'aider d'un pied pour pousser sur le plat et se stabiliser. Le bras de levier offert par l'organe de pilotage est bien supérieur à celui d'une paire de fixations conventionnelles, améliorant grandement la facilité d'usage et les capacités maximales de l'engin. Enfin, il se replie instantanément pour une manipulation et un stockage aisés.

Ce dispositif de pilotage d'une planche de surf, notamment pour la neige, comprend une première zone z de fixation des pieds, située sensiblement sur une première moitié de la planche, de préférence située en majorité dans le deuxième cinquième de la planche, et composée notamment d'inserts à vis disposés de part et d'autre d'un axe A traversant longitudinalement la planche en son centre de gravité ; la perpendiculaire de la planche avec l'axe A au niveau de la zone z formant un premier plan P ; une seconde zone de fixation des pieds z' identique à la première, située sensiblement sur la seconde moitié de la planche, de préférence située en majorité dans le quatrième cinquième de la planche, la perpendiculaire de la planche avec l'axe A au niveau de la zone z' formant un second plan P'.

Ce dispositif de pilotage est caractérisé en ce qu'il comporte:
- un premier élément de liaison, de forme et de longueur adaptées, solidaire de la planche par une première extrémité et une première embase au niveau de la zone z et contraint au moins parallèlement au plan P en un point o' de sa deuxième extrémité ;
- un second élément de liaison, de forme et de longueur adaptées, solidaire de la planche par une première extrémité et une seconde embase au niveau de la zone z' et contraint au moins parallèlement au plan P' en un point o de sa deuxième extrémité ;
- un troisième élément de gauchissement, de forme et de longueur adaptées, solidaire de l'élément de liaison au moins au niveau du point o', de l'élément de liaison au moins au niveau du point o, et maintenant entre les points o' et o une distance fixe et prédéterminée ;
la mobilisation libre de l'élément de gauchissement imposant un décalage du point o par rapport au plan P et du point o' par rapport au plan P'.

Le document FR 2 732 609 décrit un surf des neiges commandé par au moins une poignée et le document US 2006/197294 décrit un dispositif de commande d'un véhicule à ski pliable fonctionnant par gravité.

### Description sommaire des dessins

L'invention telle que définie dans la revendication 1 sera mieux comprise en se référant aux figures :
- La figure 1 représente une vue générale en perspective d'une planche de surf équipée d'un mode de réalisation du dispositif selon l'invention, au repos, et reprenant différents éléments, axes et plans décrivant l'invention et sa cinématique.
- La figure 2 représente une vue de détail en perspective d'un mode de réalisation d'une planche et de ses embases.
- La figure 3 représente une vue de détail en perspective d'un mode de réalisation d'un élément de liaison.
- La figure 4 représente une vue de détail en perspective d'un mode de réalisation d'un autre élément de liaison.
- La figure 5 représente une vue générale de profil d'un mode de réalisation d'un système de gauchissement et des éléments géométriques régissant la cinématique de l'invention.
- La figure 6 représente une vue de détail en perspective d'un mode de réalisation d'un connecteur amovible.
- Les figures 7A et 7B représentent une vue en perspective du principe selon l'invention et selon deux positions différentes.
- Les figures 8A et 8B représentent respectivement une vue en perspective et une vue de face d'une planche de surf équipée du dispositif selon l'invention, et dont l'organe de pilotage est mobilisé dans un sens antihoraire, générant un angle h selon les plans P et P'.
- Les figures 9A et 9B représentent respectivement une vue en perspective et une vue de face d'une planche de surf équipée du dispositif selon l'invention, et dont l'organe de pilotage est mobilisé dans un sens horaire, générant un angle h' selon les plans P et P'.
- Les figures 10A et 10B représentent respectivement une vue de profil et une vue en perspective d'une planche de surf équipée du dispositif selon l'invention, en position repliée.
- La figure 11 représente une vue en perspective d'une variante du dispositif selon l'invention.

### Description d'un mode de réalisation préférentielle de l'invention

Sauf précision contraire, les expressions "environ" et "sensiblement" signifient à 10 % près, de préférence à 5 % près.

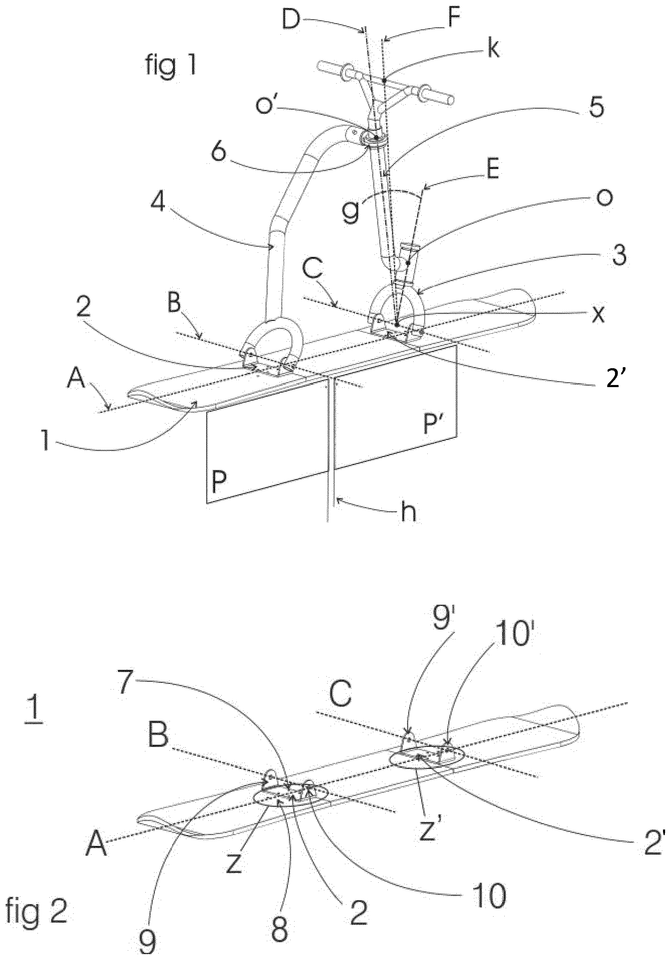

En référence aux figures, une planche de surf 1 sur neige de même type que celles usuellement trouvées dans le commerce est équipée d'un mode de réalisation préférentiel du dispositif selon l'invention. Elle comporte deux zones de fixation des pieds z et z', représentées en figure 2, situées chacune sensiblement sur une moitié opposée de la planche. Ces zones de fixation sont équipées d'inserts 8 métalliques noyés permettant d'y solidariser des fixations au moyen de vis. Ces groupes d'inserts sont en général plus nombreux que le nombre pouvant être utilisé par les fixations conventionnelles afin de présenter une plage de réglage longitudinal.

Une première embase 2 est disposée conventionnellement sur la première zone z au moyen de trous de fixation 7 et de vis (non représentées) et collaborant avec des inserts 8. Un axe A traverse la planche 1 longitudinalement en son milieu. L'embase 2 est donc disposée de part et d'autre de l'axe longitudinal A et dispose de chaque côté de deux pattes 9 d'axe équipées chacune d'un trou 10 d'axe, ces deux trous 10 étant coaxiaux selon un axe B transversal. L'embase 2 est dimensionnée et réalisée dans un matériau résistant tel que le métal ou des fibres composites permettant de supporter les contraintes auxquelles elle est soumise tout en gardant un poids et un encombrement contenus. Sa largeur sur la planche 1 permet entre autre d'y engager le pied aisément.

Selon une variante non représentée, les deux trous 10 de l'embase 2 reçoivent les extrémités d'une sangle de maintien des pieds. Cette sangle est communément réglable et rembourrée pour plus de confort. Elle est la plupart du temps réalisée par au moins une crémaillère en matière plastique collaborant avec un cliquet permettant d'en ajuster la longueur aisément.

Une seconde embase 2' identique à la première embase 2 est disposée de la même manière au niveau de la seconde zone z' de la planche 1 et définit de la même manière un axe C transversal et parallèle à l'axe B. L'embase 2' est donc disposée de part et d'autre de l'axe longitudinal A et dispose de chaque côté de deux pattes 9' d'axe équipées d'un trou 10' d'axe, ces deux trous 10' étant co-axiaux selon l'axe C transversal.

Un utilisateur peut placer un premier pied sur la première zone z et un deuxième pied sur la deuxième zone z'. De ce fait, en divisant la planche selon la longueur en cinq parties successives de même longueur, la majorité de la surface d'appui du premier pied sur la planche 1 est située dans la deuxième partie de la planche et la majorité de la surface d'appui du premier pied sur la planche 1 est située dans la quatrième partie.

On définit (comme cela est représenté en figure 1) un plan P perpendiculaire à la planche 1 et à l'axe B au niveau de la zone z. On définit également un second plan P' perpendiculaire à la face supérieure de la planche 1 et à l'axe C au niveau de la zone z'. On appelle h l'angle entre les plans P et P'. Lorsque la planche 1 est au repos, les plans P et P' sont parallèles et l'angle h entre eux est donc nul.

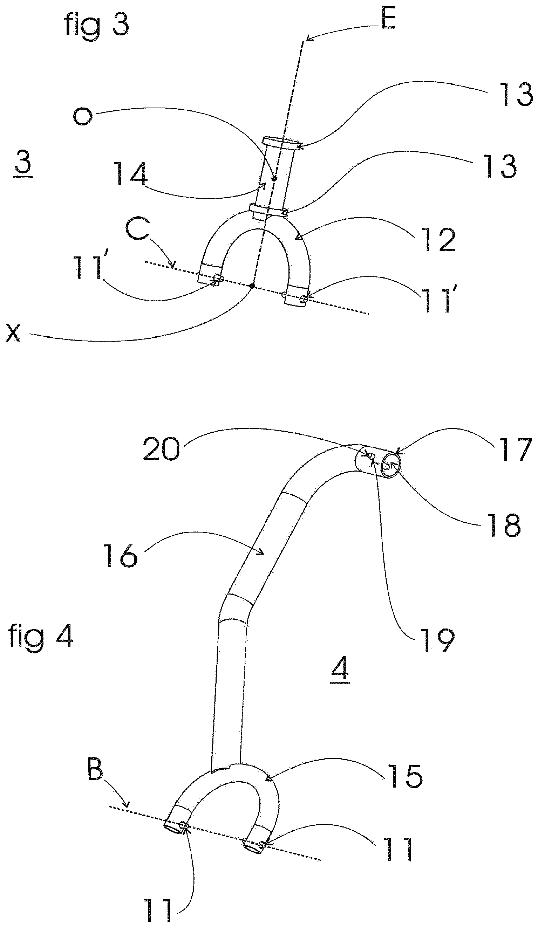

Un premier élément de liaison 4, représenté seul en figure 4, est reliée de façon pivotante à l'embase 2 au niveau de la zone z par une première extrémité 15 basse, notamment grâce à des axes amovibles 11 tels des vis ou des goupilles, et disposés co-axialement à l'axe B. L'extrémité 15 pouvant former un logement permettant d'y engager le pied arrière d'un utilisateur selon une forme de « U » inversé. La largeur de l'extrémité 15 est dimensionnée de façon à supporter des contraintes de levier exercées de part et d'autre de l'axe longitudinal A sur l'élément de liaison 4. La seconde extrémité 17 haute de l'élément de liaison 4 est de forme notamment tubulaire et creuse, formant un logement cylindrique 18, et équipée d'un trou d'axe 19 radial collaborant avec un axe amovible tel une goupille 20. Le corps 16 principal de l'élément de liaison 4 d'une forme et d'une longueur prédéterminées, relie solidement les deux extrémités 15 et 17 entre elles. Sa forme est asymétrique selon le mode de réalisation préférentiel et le plan P, afin de permettre de contourner le haut des jambes ainsi que le bassin d'un utilisateur se tenant normalement debout et droit sur la planche 1. De plus, en cas de flexion prononcée des jambes, lors d'une réception de saut notamment, il est important d'éviter tout contact avec la structure de l'engin. L'élément de liaison 4 n'est donc pas rectiligne dans le mode de réalisation préférentiel. Selon un mode de réalisation, en considérant un plan de référence contenant l'axe A et le point o', plus de 75 % en volume de l'élément de liaison 4 est situé d'un seul côté du plan de référence. Cette disposition est aisément réversible au moyen des axes amovibles 11, de telle sorte que l'utilisateur peut choisir de quel côté mettre l'élément de liaison 4. Ainsi le corps 16 de l'élément de liaison 4 est positionné d'un côté ou de l'autre des jambes de l'utilisateur. De façon générale, les éléments de fixation de l'élément de liaison 4 à la planche 1 sont adaptés pour permettre de monter l'élément de liaison 4 orienté d'un côté du plan de référence ou de l'autre côté du plan de référence.

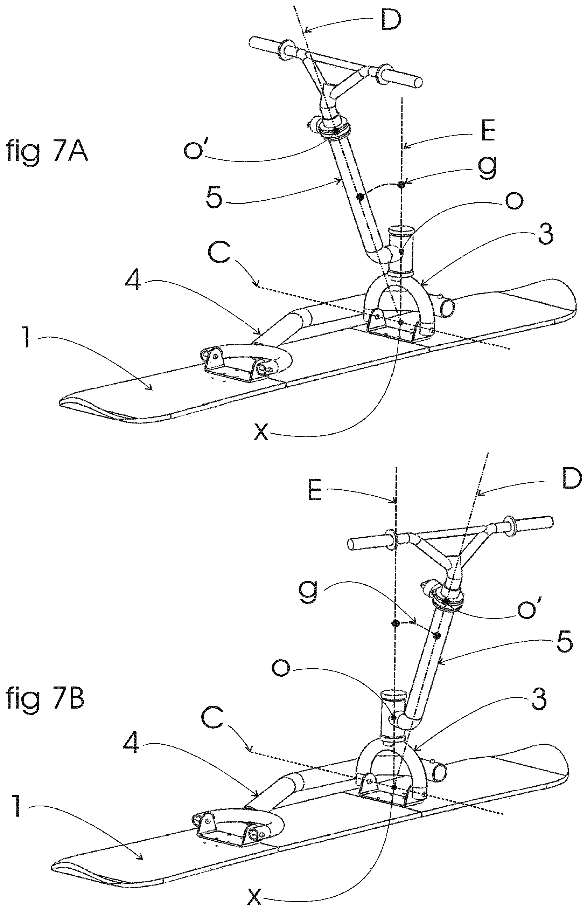

Cet élément de liaison 4 peut pivoter librement (comme cela est par exemple représenté en figure 7A) autour de l'axe B lorsqu'il n'est pas contraint par d'autres éléments. Il reste toujours contraint parallèlement au plan P. La distance pouvant séparer l'extrémité 17 du plan P est prédéterminée et constante. Le dimensionnement global ainsi que les matériaux de construction de l'élément de liaison 4 sont de nature à conserver cette distance prédéterminée et résister au mieux à toute contrainte de flexion latérale. Il est notamment réalisé en profilé d'aluminium ou bien en fibres composites pour conjuguer résistance et légèreté. La largeur de l'extrémité 15 est dimensionnée de façon à supporter des contraintes de levier exercées de part et d'autre de l'axe longitudinal A sur l'élément de liaison 4.

Un second élément de liaison 3, représenté seul en figure 3, est relié de façon pivotante, au moyen d'axes amovibles 11' tels des vis ou des goupilles disposés co-axialement selon l'axe C, à l'embase 2' au niveau de la zone z', par une première extrémité 12 basse, formant notamment un logement permettant d'y engager l'autre pied de l'utilisateur. Une seconde extrémité haute de forme cylindrique constitue un arbre 14 mâle, et fait office d'axe de rotation selon un axe de gauchissement E. Cet arbre 14 est équipé de part et d'autre de deux bagues 13 de retenue. Ces bagues sont fixées par des moyens appropriés non représentés. L'élément de liaison 3 peut pivoter autour de l'axe C lorsqu'il n'est pas contraint par d'autres éléments (comme cela est par exemple représenté en figure 7A). Il reste toujours contraint parallèlement au plan P'. Le centre de gravité de l'arbre 14 est matérialisé en un point o. Ainsi la distance pouvant séparer le point o du plan P', nulle selon ce mode de réalisation, reste cependant prédéterminée et constante. L'axe de gauchissement E est sensiblement coaxial à l'arbre 14 et parallèle au plan P'. Un point x représente le point de rencontre entre l'axe C et l'axe E. Le dimensionnement global ainsi que les matériaux de construction de l'élément de liaison 3 sont de nature à conserver cette distance prédéterminée et résister au mieux à toute contrainte de flexion latérale. L'élément de liaison 3 est contraint parallèlement au plan P'. Il est notamment réalisé en profilé d'aluminium ou bien en matériaux composites pour conjuguer résistance et légèreté. La largeur de l'extrémité 12 est dimensionnée de façon à supporter des contraintes de levier exercées de part et d'autre de l'axe longitudinal A sur l'élément de liaison 3.

Selon une variante non représentée, des moyens de retenue des pieds, indépendants du dispositif selon l'invention, sont disposés à proximité des deux embases 2, 2' sensiblement sur l'axe longitudinal A. En conséquence, les parties basses 15 et 12 respectives des éléments de liaisons 4 et 3 sont dissociées de toute contrainte d'engagement des pieds et peuvent alors prendre des formes différentes liées à des contraintes purement mécaniques ou esthétiques ; notamment une forme en « L » gauche ou droite, voire une forme en « T » inversé, ces formes remplaçant alors la forme décrite en « U » inversé selon le mode de réalisation préférentiel.

Un élément de gauchissement 5, décrit en relation avec les figures 1, 5 et 7, dispose d'une extrémité 21 basse femelle de forme cylindrique creuse et faisant office d'alésage. Le centre de gravité de l'extrémité 21 est situé sur le point o. Il est rappelé que l'axe de gauchissement E passe par le point o. Il croise l'axe C en un point x. Cet axe E est coaxial avec la forme cylindrique de l'extrémité 21 qui collabore judicieusement en diamètre et en longueur avec l'arbre 14 mâle de l'élément de liaison 3. L'extrémité 21 est retenue captive sans jeu excessif entre les deux bagues 13 de l'élément de liaison 3. Des paliers anti-friction non représentés peuvent être disposés entre l'extrémité 21 et l'arbre 14.

Les extrémités 21 et 14, collaborent coaxialement entre elles sur une longueur suffisante pour interdire toute liberté autre que la rotation entre l'élément de liaison 3 et l'élément de gauchissement 5 et supporter les contraintes de dissociation axiale. Cette longueur est idéalement comprise entre 20 mm et 120 mm mais est supérieure à 10 mm, selon les matériaux choisis. De la même manière, la distance séparant les points o et x est également suffisante pour supporter les contraintes de dissociation axiale et est idéalement comprise entre 20 mm et 120 mm mais est supérieure à 10 mm, selon les matériaux choisis.

Le corps principal 22 d'une forme et d'une longueur adaptée est équipé de deux paliers épaulés 23 disposés en vis à vis et formant ainsi une cage cylindrique anti-friction. Cette paire de paliers épaulés 23 cylindriques détermine en son centre de gravité un point o'. Un axe de rotation D passe par les points o' et x. Les axes E et D décrivent entre eux un angle prédéterminé g. Cette paire de paliers épaulés 23 est fixée sur le corps principal 22 par des moyens non représentés tels des vis ou des rivets, permettant au besoin d'en ajuster la position en hauteur.

L'élément de gauchissement 5 est également équipé à son autre extrémité, selon le mode de réalisation décrit, d'un organe de pilotage 24 tel un guidon, pourvu de deux organes de préhension 25 tels des poignées. Le centre de gravité des organes de préhension 25 définit un point k. Un axe de rappel F passe par les points k et x. L'angle entre l'axe de rappel F et l'axe D est compris entre 0° et 25°, de préférence entre 2° et 17°, plus préférentiellement entre 5° et 15°, encore plus préférentiellement entre 6° et 8°, notamment environ 7°.

Selon un dispositif conventionnel et non représenté, l'organe de pilotage 25 peut être réglable en hauteur au regard du corps principal 22 de l'élément de gauchissement 5 au travers duquel il peut coulisser.

Selon une variante non représentée, les fonctions respectives arbre/alésage des éléments 21 et 14 sont inversées, la partie mâle étant alors située sur l'élément de gauchissement 5 et la partie femelle étant située sur l'élément de liaison 3. Les contraintes mécaniques régissant cette variante sont les mêmes que celles décrites selon le mode de réalisation préférentiel.

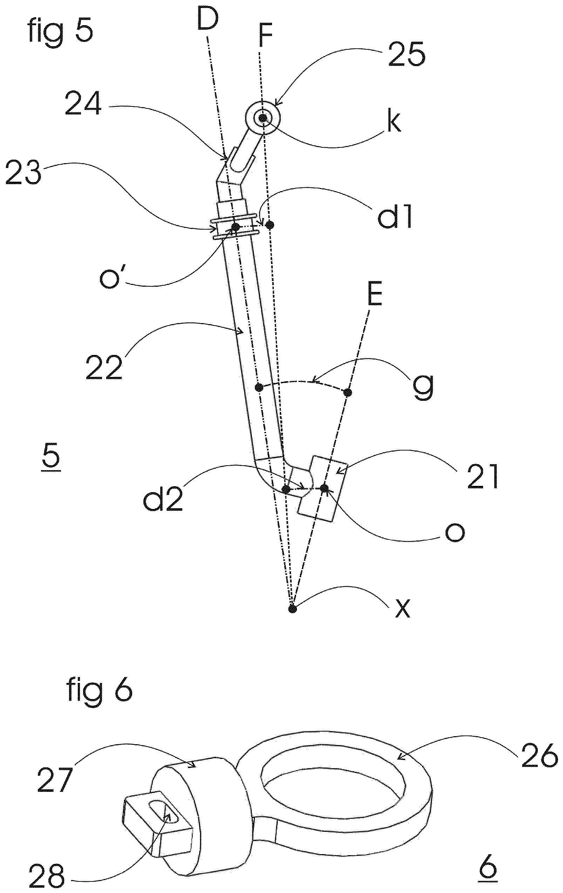

Un élément de retenue 6 amovible représenté figure 6 est rendu solidaire de la paire de paliers épaulés 23 par l'intermédiaire d'un anneau 26 qui y est captif. Le diamètre intérieur de l'anneau 26 est sensiblement supérieur au diamètre extérieur du palier des paliers épaulés 23. Cette paire de paliers épaulés 23 est disposée co-axialement à l'anneau 26 qui peut donc tourner librement mais ne peut effectuer aucun mouvement de translation le long du corps principal 22. L'élément de retenue 6 amovible dispose également d'un mandrin 27 situé dans un prolongement radial de l'anneau 26. Le mandrin 27 est judicieusement dimensionné de sorte qu'il puisse collaborer avec le logement cylindrique 18 de l'élément de liaison 4. Un logement de goupille 28 prolonge le mandrin 27 et collabore avec la goupille 20 de l'élément de liaison 4. L'élément de retenue peut donc être relié de façon pivotante à l'extrémité 17 haute de l'élément de liaison 4.

Quand l'élément de retenue amovible 6 est en place dans l'extrémité 17 haute de l'élément de liaison 4, le point o' en est rendu indissociable et à une distance fixe et prédéterminée de l'élément de liaison 4. Ainsi lorsque le dispositif est au repos et que l'élément de gauchissement 5 n'est pas mobilisé, le point o est à une distance nulle ou prédéterminée du plan P et le point o' est à une distance nulle ou prédéterminée du plan P'.

L'objet de l'invention est d'imposer un décalage du point o par rapport au plan P et/ou un décalage du point o' par rapport au plan P' au moyen d'une mobilisation de l'élément de gauchissement 5, notamment par un mouvement de rotation selon l'axe D grâce à l'organe de pilotage 24 ; la distance séparant les points o et o' étant fixe et prédéterminée.

Selon une variante non représentée, la fonction de verrouillage décrite ci-après est assurée sans goupille rapportée amovible mais d'une seule pièce moulée, pivotante autour de l'extrémité 17 et disposant des ergots nécessaires pour s'accrocher à un axe fixe disposé au travers des trous 19 de ladite extrémité.

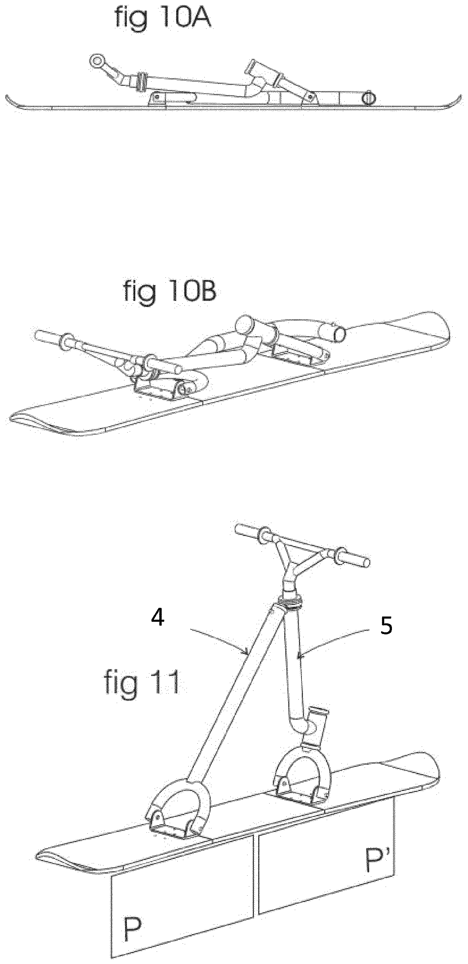

Lorsque la goupille 20 amovible n'est pas disposée au travers du logement de goupille 28, alors l'élément de liaison 3, l'élément de gauchissement 5 ainsi que l'élément de retenue 6 amovible, reliés entre eux, ne sont plus reliés à l'élément de liaison 4 comme le montre la figure 7A. Le dispositif selon l'invention peut alors se replier comme cela est représenté sur les figures 10A et 10B, ce qui est pratique pour les remontées mécaniques, le transport ou bien le stockage.

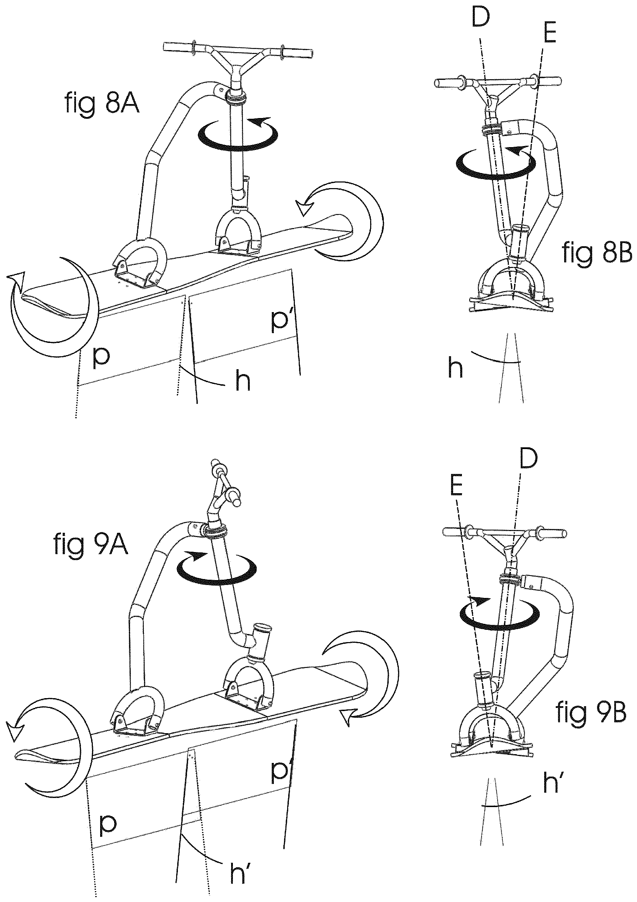

Lorsque la goupille 20 amovible est disposée conjointement au travers du logement de goupille 28 et du trou d'axe 19, alors les éléments 3, 4, 5 et 6 sont solidarisés entre eux (comme cela est représenté en figure 1) et forment en théorie un ensemble hyperstatique, permettant au moins le pilotage de la planche 1 par basculement de l'organe de pilotage 24 de part et d'autre de l'axe A. Les planches de surf disposent néanmoins d'une certaine souplesse à la construction. Ainsi, la rotation par l'utilisateur de l'organe de pilotage 24, selon l'axe de rotation D, est donc possible et entraîne une déformation de la planche 1 en gauchissement selon l'axe longitudinal A comme cela est illustré par les figures 8A, 8B, 9A et 9B.

L'élément de gauchissement 5 est solidaire de l'élément de liaison 3, mais dispose d'au moins une liberté de mouvement en rotation selon l'axe E, et ce indépendamment de l'élément de liaison 4 qui n'est pas relié à l'élément de gauchissement 5 dans les figures 7A et 7B. Ce déplacement est possible dans les deux sens, horaire et anti-horaire, selon un secteur angulaire minimum d'au moins 2°, de préférence d'au moins quelques degrés, notamment 5°, plus préférentiellement d'au moins 10°. Dans le mode de réalisation préférentiel illustré sur les deux figures 7A et 7B, on comprend aisément que ce secteur est de 360°. Selon d'autres modes de réalisation, une faible liberté angulaire de l'organe de pilotage 24 peut être compensée par une valeur plus élevée de l'angle g pour un même effet de gauchissement sur la planche 1, mais au prix d'un effort plus important sur ledit organe de pilotage.

Pour un même secteur angulaire de rotation de l'organe de pilotage 24, selon l'axe de rotation D, la déformation par effet de gauchissement sur la planche 1 sera proportionnelle à la valeur de l'angle g prédéterminé séparant les deux axes D et E. La valeur de g caractérisant l'angle entre les axes E et D est d'au moins 2°, de préférence au minimum de quelques degrés, notamment 5°, plus préférentiellement d'au moins 10°, pour garantir un effet de torsion perceptible, et est préférentiellement comprise entre 10° et 35°. Si la valeur de l'angle prédéterminé g était égal à 0°, alors le point o se trouverait sur l'axe de rotation D et son déplacement radial serait nul. La planche 1 ne subirait dans ce cas aucune déformation en torsion selon l'axe A.

Le point o et l'axe E sont communs (figures 1, 3, 5) à l'élément de liaison 3 et l'élément de gauchissement 5 caractérisant leur solidarité axiale, comme cela est représenté notamment sur les figures 7A et 7B.

La rotation selon un sens anti-horaire de l'organe de pilotage 24 crée un angle h entre les plans P et P', caractérisant le gauchissement induisant un virage vers la gauche de la planche 1, comme cela est représenté sur les figures 8A et 8B.

La rotation selon un sens horaire de l'organe de pilotage 24 crée un angle h' entre les plans P et P', caractérisant le gauchissement induisant un virage vers la droite de la planche 1, comme cela est représenté sur les figures 9A et 9B.

Cette déformation impose le décalage du point o par rapport au plan P et du point o' par rapport au plan P'. L'angle h caractérise l'amplitude de l'effet de gauchissement sur la planche 1, indépendamment de la distance séparant les points o et x, car c'est la valeur de l'angle g qui détermine cette amplitude.

Lorsque l'organe de pilotage 24 est pivoté au maximum de son amplitude d'effet, c'est à dire +/- 90° par rapport à sa position au repos, alors les angles h et h' sont égaux à l'angle prédéterminé g.

Lorsque l'utilisateur pilote sa planche de surf, il engage un premier pied dans l'extrémité 21 de l'élément de liaison 3 et le second pied dans l'extrémité 22 de l'élément de liaison 4. Il peut alors incliner latéralement la planche 1 selon l'axe longitudinal A au moyen de l'organe de pilotage 24, par effet de levier. Il peut simultanément tourner ledit organe de pilotage selon l'axe de rotation D au choix dans un sens horaire ou bien antihoraire. Cette action permet donc, en plus de l'effet de levier latéral, d'imposer de façon proportionnée et simultanée une contrainte de torsion sur la planche 1 selon l'axe longitudinal A et caractérisée par l'angle h entre les plans P et P'. L'élément de gauchissement 5 pivote alors autour de l'axe D.

Lorsque le pilote incline latéralement la planche 1 autour de l'axe A au moyen de l'organe de pilotage 2), il la décolle de la neige vers son côté intérieur au virage et s'oppose ainsi par effet de levier à une force appliquée vers le bas par son propre poids, proportionnellement à la largeur de la planche 1 et à la force centrifuge due à la vitesse d'exécution. Cette force exercée par chacun de ses pieds, est successivement transmise jusqu'à l'organe de pilotage 24, d'une part par la première embase 2, l'élément de liaison 4, l'élément de retenue 6 amovible et l'élément de gauchissement 5 ; d'autre part par la seconde embase 2', l'élément de liaison 3 puis à nouveau l'élément de gauchissement 5. L'utilisateur résiste à cette force au moyen des organes de préhension 25 tels une paire de poignées dont le centre de gravité est matérialisé par le point k sur la figure 1. Cette résistance s'exerce par un effet de levier le long de l'axe de rappel F passant par les points k et x comme cela est représenté sur les figures 1 et 5. Cet effet de levier est proportionnel à la distance qui sépare les points k et x.

Une distance d2 excessive entre le point o de l'axe de rappel F peut entraîner un effet de couple parasite sur l'organe de pilotage 24, dû au poids appliqué par le pilote sur sa jambe correspondante. De la même manière, une distance d1 excessive entre le point o' de l'axe de rappel F peut entraîner un effet de couple parasite en sens inverse au premier sur l'organe de pilotage 24, dû au poids appliqué par le pilote sur son autre jambe.

Les points de contact o et o' respectifs des éléments de liaison 3 et 4 avec l'élément de gauchissement 5, sont donc disposés préférentiellement de part et d'autre de l'axe de rappel F lorsque la distance d1 n'est pas nulle afin de ne pas combiner les couples de rappel mais au contraire de les rendre antagonistes. Selon cette disposition, les distances d1 et d2 constituent une variable pour définir le sens et la valeur l'effet de couple final induit sur le pilotage de la planche 1. Selon une autre configuration, le point o' peut être disposé sur l'axe F lui-même, le rendant colinéaire avec l'axe D et rendant la distance d1 nulle. On notera que la distance d2 est toujours indépendante de l'angle g. Cette configuration entraînera naturellement le virage dans le sens de la pente, ce qui peut être un effet recherché.

Selon une variante décrite en relation avec la figure 11, l'élément de liaison 4 est sensiblement rectiligne et parallèle au plan P. Les jambes de l'utilisateur sont alors disposées de part et d'autre de l'élément de liaison 4. Selon une autre variante non représentée, l'élément de liaison 4 est muni d'un siège de façon à pouvoir piloter le dispositif en position assise. Selon une autre variante non représentée, l'élément de retenue 6 reste solidaire de l'élément de liaison 4 et est dissociable par l'utilisateur de l'élément de gauchissement 5. Selon une autre variante non représentée, l'élément de liaison 4 est télescopique afin de faire varier sa longueur tout en maintenant le point o' à une distance constante du plan P, quel que soit le déplacement de l'élément de liaison 4 autour de l'axe B. Cette disposition peut également permettre de replier le dispositif sans la dissociation de l'élément de retenue 6 amovible d'un quelconque élément auquel il est relié. Selon une autre variante non représentée, l'élément de liaison 4 est constitué de deux demi-parties reliées entre elles au moyen d'un axe rigide et parallèle à l'axe B afin de faire varier la longueur totale dudit élément de liaison 4 tel un compas tout en maintenant le point o' à une distance constante et prédéterminée du plan P, quel que soit le déplacement de l'élément de liaison 4 autour de l'axe B. Cette disposition peut permettre, par le bon ajustement des longueurs relatives des deux demi-parties du dit élément 4, de replier le dispositif sans la dissociation du connecteur amovible 6 d'un quelconque élément duquel il est solidaire.

## Revendications

1. Dispositif de pilotage pour une planche de surf (1), notamment pour la neige, où la planche de surf (1) comprend :
- une première zone (z) de fixation des pieds, située sensiblement sur une première moitié de la planche, la perpendiculaire de la planche (1) au niveau de la première zone (z) avec un premier axe (A), traversant longitudinalement la planche en son centre de gravité, formant un premier plan (P) avec le premier axe ; et
- une seconde zone (z') de fixation des pieds, située sensiblement sur une seconde moitié de la planche, la perpendiculaire de la planche (1) au niveau de la seconde zone (z') avec le premier axe (A) formant un second plan (P') avec le premier axe,
le dispositif de pilotage comprenant :
- un premier élément de liaison (4) destiné à être relié à la planche (1) à une première extrémité (15) par une première embase (2) au niveau de la première zone (z) et contraint au moins parallèlement au premier plan (P) en un premier point (o') à une deuxième extrémité (17) lorsque le premier élément de liaison (4) est relié à la planche (1) ;
- un second élément de liaison (3) destiné à être relié à la planche (1) à une troisième extrémité (12) par une seconde embase (2') au niveau de la seconde zone (z') et contraint au moins parallèlement au second plan (P') en un second point (o) à une quatrième extrémité (14) lorsque le second élément de liaison (3) est relié à la planche (1) ;
- un élément de gauchissement (5) relié au premier élément de liaison (4) au moins au niveau du premier point (o'), au second élément de liaison (3) au moins au niveau du second point (o), et maintenant entre les premier et second points (o', o) une distance fixe et prédéterminée, la mobilisation libre de l'élément de gauchissement (5) imposant un décalage du second point (o) par rapport au premier plan (P) et du premier point (o') par rapport au second plan (P')
dans lequel l'élément de gauchissement (5) est relié au second élément de liaison (3) de façon pivotante autour d'un second axe (E) contenant le second point (o), et peut librement pivoter autour du second axe (E) selon un secteur angulaire d'au moins 2°,
**caractérisé en ce que** l'élément de gauchissement (5) est relié au premier élément de liaison (4) de façon pivotante autour d'un troisième axe de rotation (D) contenant le premier point (o'), le second axe (E) et le troisième axe (D) présentant entre eux un angle (g) d'au moins 2°.

2. Dispositif de pilotage selon la revendication 1, dans lequel le second élément de liaison (3) est solidaire de la seconde embase (2') de façon pivotante autour d'un quatrième axe (C) et dans lequel l'élément de gauchissement (5) comprend des organes de préhension (25), le premier point (o') étant situé entre les organes de préhension et le second point (o), les organes de préhension définissant un cinquième axe (F) passant par le centre de gravité (k) des organes de préhension et le point d'intersection (x) entre le second axe (E) et quatrième axe (C).

3. Dispositif de pilotage selon la revendication 2, dans lequel les premier et second points (o', o) sont disposés de part et d'autre du cinquième axe (F).

4. Dispositif de pilotage selon la revendication 2, dans lequel le premier point (o') est coïncident sur le cinquième axe (F).

5. Dispositif de pilotage selon l'une quelconque des revendications précédentes, comprenant un élément de retenue (6) qui relie le premier élément de liaison (4) avec l'élément de gauchissement (5), et est rendu amovible d'au moins le second élément de liaison (4) ou l'élément de gauchissement (5).

6. Dispositif de pilotage selon l'une quelconque des revendications précédentes, dans lequel le premier élément de liaison (4) n'est pas rectiligne.

7. Dispositif de pilotage selon l'une quelconque des revendications précédentes, dans lequel le premier élément de liaison (4) est relié à la planche (1) de façon pivotante autour d'un sixième axe (B).

8. Dispositif de pilotage selon la revendication 7, dans lequel le premier élément de liaison (4) est télescopique afin de faire varier sa longueur tout en maintenant le premier point (o') à une distance constante du premier plan (P), quel que soit le déplacement du premier élément de liaison (4) autour du sixième axe (B).

9. Dispositif de pilotage selon la revendication 7, dans lequel le premier élément de liaison (4) comprend deux demi-parties sensiblement égales et reliées entre elles selon un septième axe de rotation parallèle au sixième axe (B) afin de faire varier la longueur totale entre les extrémités du premier élément de liaison (4) tout en maintenant le premier point (o') à une distance constante du premier plan (P), quel que soit le déplacement du premier élément de liaison (4) autour du sixième axe (B).

## Patentansprüche

1. Vorrichtung zur Steuerung eines Surfboards (1), insbesondere für den Schnee, wobei das Surfboard (1) umfasst:
- eine erste Zone (z) zum Fixieren der Füße, die sich im Wesentlichen in einer ersten Hälfte des Boards befindet, wobei die Senkrechte des Boards (1) im Bereich der ersten Zone (z) mit einer ersten Achse (A), die das Board an seinem Schwerpunkt in Längsrichtung durchquert, eine erste Ebene (P) mit der ersten Achse bildet; und
- eine zweite Zone (z') zum Fixieren der Füße, die sich im Wesentlichen in einer zweiten Hälfte des Boards befindet, wobei die Senkrechte des Boards (1) im Bereich der zweiten Zone (z') mit der ersten Achse (A) eine zweite Ebene (P') mit der ersten Achse bildet,
wobei die Vorrichtung zur Steuerung umfasst:
- ein erstes Verbindungselement (4), das dazu bestimmt ist, an einem ersten Ende (15) durch eine erste Basis (2) im Bereich der ersten Zone (z) mit dem Board (1) verbunden zu werden, und mindestens parallel zur ersten Ebene (P) in eine erste Stelle (o') an einem zweiten Ende (17) gezwungen ist, wenn das erste Verbindungselement (4) mit dem Board (1) verbunden ist;
- ein zweites Verbindungselement (3), das dazu bestimmt ist, an einem dritten Ende (12) durch eine zweite Basis (2') im Bereich der zweiten Zone (z') mit dem Board (1) verbunden zu werden, und mindestens parallel zur zweiten Ebene (P') in eine zweite Stelle (o) an einem vierten Ende (14) gezwungen ist, wenn das zweite Verbindungselement (3) mit dem Board (1) verbunden ist;
- ein Verspannungselement (5), das mit dem ersten Verbindungselement (4) mindestens im Bereich der ersten Stelle (o') verbunden ist, mit dem zweiten Verbindungselement (3) mindestens im Bereich der zweiten Stelle (o), und das zwischen der ersten und zweiten Stelle (o', o) einen festen und vorbestimmten Abstand hält, wobei die freie Bewegung des Verspannungselements (5) eine Verschiebung der zweiten Stelle (o) in Bezug auf die erste Ebene (P) und der ersten Stelle (o') in Bezug auf die zweite Ebene (P') ausführt
wobei das Verspannungselement (5) in einer um eine zweite Achse (E), die die zweite Stelle (o) enthält, schwenkbaren Form mit dem zweiten Verbindungselement (3) verbunden ist, und um die zweite Achse (E) herum in einem Winkelsektor von mindestens 2° frei schwenken kann,
**dadurch gekennzeichnet, dass** das Verspannungselement (5) in einer um eine dritte Drehachse (D), die die erste Stelle (o') enthält, schwenkbaren Form mit dem ersten Verbindungselement (4) verbunden ist, wobei die zweite Achse (E) und die dritte Achse (D) zwischen sich einen Winkel (g) von mindestens 2° aufweisen.

2. Vorrichtung zur Steuerung nach Anspruch 1, wobei das zweite Verbindungselement (3) fest mit der zweiten Basis (2'), in einer um eine vierte Achse (C) herum schwenkbaren Form verbunden ist, und wobei das Verspannungselement (5) Greiforgane (25) umfasst, wobei sich die erste Stelle (o') zwischen den Greiforganen und der zweiten Stelle (o) befindet, wobei die Greiforgane eine fünfte Achse (F) definieren, die durch den Schwerpunkt (k) der Greiforgane und den Schnittpunkt (x) zwischen der zweiten Achse (E) und der vierten Achse (C) verläuft.

3. Vorrichtung zur Steuerung nach Anspruch 2, wobei die erste und zweite Stelle (o', o) beiderseits der fünften Achse (F) angeordnet sind.

4. Vorrichtung zur Steuerung nach Anspruch 2, wobei die erste Stelle (o') mit der fünften Achse (F) deckungsgleich ist.

5. Vorrichtung zur Steuerung nach einem der vorstehenden Ansprüche, ein Rückhalteelement (6) umfassend, das das erste Verbindungselement (4) mit dem Verspannungselement (5) verbindet und von mindestens dem zweiten Verbindungselement (4) oder dem Verspannungselement (5) abnehmbar gemacht wird.

6. Vorrichtung zur Steuerung nach einem der vorstehenden Ansprüche, wobei das erste Verbindungselement (4) nicht geradlinig ist.

7. Vorrichtung zur Steuerung nach einem der vorstehenden Ansprüche, wobei das erste Verbindungselement (4) in um eine sechste Achse (B) schwenkbarer Form mit dem Board (1) verbunden ist.

8. Vorrichtung zur Steuerung nach Anspruch 7, wobei das erste Verbindungselement (4) teleskopisch ist, um seine Länge variieren zu lassen, und dabei die erste Stelle (o') unabhängig von der Verschiebung des ersten Verbindungselements (4) um die sechste Achse (B) herum in einem konstanten Abstand von der ersten Ebene (P) zu halten.

9. Vorrichtung zur Steuerung nach Anspruch 7, wobei das erste Verbindungselement (4) zwei Halbteile umfasst, die im Wesentlichen gleich und entlang einer siebten Drehachse parallel zur sechsten Achse (B) miteinander verbunden sind, um die Gesamtlänge zwischen den Enden des ersten Verbindungselements (4) variieren zu lassen, und dabei die erste Stelle (o') unabhängig von der Verschiebung des ersten Verbindungselements (4) um die sechste Achse (B) herum in einem konstanten Abstand von der ersten Ebene (P) zu halten.

## Claims

1. A drive device for a surfboard (1), in particular for snow, where the surfboard (1) comprises:
- a first zone (z) for fastening the feet, located substantially on a first half of the board, the perpendicular of the board (1) at the first zone (z) with a first axis (A), longitudinally passing through the board in the center of gravity thereof, forming a first plane (P) with the first axis; and
- a second zone (z') for fastening the feet, located substantially on a second half of the board, the perpendicular of the board (1) at the second zone (z') with the first axis (A) forming a second plane (P') with the first axis,
the drive device comprising:
- a first connecting element (4) intended to be connected to the board (1) at a first end (15) by a first base (2) at the first zone (z) and constrained at least parallel to the first plane (P) in a first point (o') at a second end (17) when the first connecting element (4) is connected to the board (1);
- a second connecting element (3) intended to be connected to the board (1) at a third end (12) by a second base (2') at the second zone (z') and constrained at least parallel to the second plane (P') in a second point (o) at a fourth end (14) when the second connecting element (3) is connected to the board (1);
- a warping element (5) connected to the first connecting element (4) at least at the first point (o'), to the second connecting element (3) at least at the second point (o), and maintaining a fixed and predetermined distance between the first and second points (o', o), the free mobilization of the warping element (5) imposing an offset of the second point (o) relative to the first plane (P) and of the first point (o') relative to the second plane (P');
wherein the warping element (5) is pivotally connected to the second connecting element (3) about a second axis (E) containing the second point (o), and can freely pivot about the second axis (E) according to an angular sector of at least 2°,
**characterized in that** the warping element (5) is pivotally connected to the first connecting element (4) about a third axis of rotation (D) containing the first point (o'), the second axis (E) and the third axis (D) having an angle (g) of at least 2° between them.

2. The drive device according to claim 1, wherein the second connecting element (3) is pivotally secured to the second base (2') about a fourth axis (C) and wherein the warping element (5) comprises gripping members (25), the first point (o') being located between the gripping members and the second point (o), the gripping members defining a fifth axis (F) passing through the center of gravity (k) of the gripping members and the point of intersection (x) between the second axis (E) and the fourth axis (C).

3. The drive device according to claim 2, wherein the first and second points (o', o) are disposed on either side of the fifth axis (F).

4. The drive device according to claim 2, wherein the first point (o') is coincident on the fifth axis (F).

5. The drive device according to any one of the preceding claims, comprising a retaining element (6) which connects the first connecting element (4) with the warping element (5), and is made removable from at least the second connecting element (4) or the warping element (5).

6. The drive device according to any one of the preceding claims, wherein the first connecting element (4) is not rectilinear.

7. The drive device according to any one of the preceding claims, wherein the first connecting element (4) is pivotally connected to the board (1) about a sixth axis (B).

8. The drive device according to claim 7, wherein the first connecting element (4) is telescopic in order to vary its length while maintaining the first point (o') at a constant distance from the first plane (P), regardless of the displacement of the first connecting element (4) about the sixth axis (B).

9. The drive device according to claim 7, wherein the first connecting element (4) comprises two half-portions which are substantially equal and interconnected along a seventh axis of rotation parallel to the sixth axis (B) in order to vary the total length between the ends of the first connecting element (4) while maintaining the first point (o') at a constant distance from the first plane (P), regardless of the displacement of the first connecting element (4) about the sixth axis (B).
